# EUROPEAN PATENT SPECIFICATION

(11) **EP 2 270 327 B1**
(45) Date of publication and mention of the grant of the patent: **16.04.2014**
(21) Application number: 10166853.1
(22) Date of filing: 22.06.2010
(51) Int. Cl.: F02M 25/07

(54) **Flow passage member structure**
Strömungskanalelementstruktur
Structure d'élément de passage de flux

(30) Priority: 01.07.2009 JP 2009156676
(43) Date of publication of application: 05.01.2011
(73) Proprietor: Mitsubishi Jidosha Kogyo Kabushiki Kaisha, Tokyo 108-8410 (JP)
(72) Inventor: Kimura, Hiroyuki, Tokyo Tokyo (JP); Maehara, Kazuto, Okazaki-shi Aichi (JP)
(74) Representative: Vossius & Partner

(56) References cited:
- EP-A1- 0 509 672
- DE-A- 19 642 685
- DE-A1-102004 049 292
- FR-A1- 2 655 382
- US-A- 3 927 650
- US-A- 4 130 094
- US-B1- 6 648 338
- US-B1- 7 152 571

## Description

The present invention relates to a flow passage member structure. Particularly, the present invention relates to a flow passage member structure suitable for coupling members through which two fluids having a difference in temperature flow. More specifically, the present invention relates to a flow passage member structure suitable for an internal combustion engine that performs exhaust gas recirculation.

A device for exhaust gas recirculation and supply of secondary air to a combustion engine is known from DE 196 426 85. The device comprises discharge and intake channels with branch lines that discharge into a collection pipe provided on the side of the discharge channel. The collection pipe on the discharge side merges into a collection pipe on the side of the intake channels that is connected with branch lines discharging into said intake channels.

Conventionally, there has been known an exhaust gas recirculation (EGR: Exhaust Gas Recirculation) system that takes out a part of an exhaust gas from an exhaust passage of an internal combustion engine and leads the exhaust gas to an intake passage, and mixes the intake air and exhaust gas to be admitted to the internal combustion engine to thereby reduce toxic substances in the exhaust gas.

A technique of such an exhaust gas recirculation system (hereinafter, referred to as an EGR system) applied to an internal combustion engine equipped with a turbo charger has been proposed (refer to Patent Document 1).

This EGR system has a high-pressure EGR passage that communicates an exhaust passage further upstream than a turbine of the turbo charger and an intake passage further downstream than a compressor of the turbo charger with each other. A portion of exhaust is led as a high-pressure EGR gas to the intake passage via the high-pressure EGR passage, and the high-pressure EGR gas and fresh air are mixed in the intake passage, and supplied as a gas mixture (an intake air) to the internal combustion engine.

By a measurement of the relationship between the concentration of toxic substances included in an exhaust gas to be discharged from an internal combustion engine provided with such an EGR system and the flow rate of high-pressure EGR gas to be led to the intake passage, following facts are discovered.

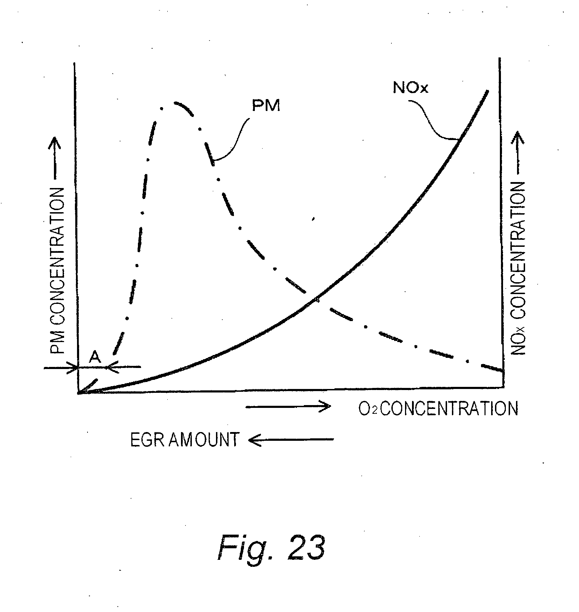

As shown in Fig. 23, nitrogen oxides (NO_{X}) are reduced as the EGR amount increases to lower oxygen concentration.

Moreover, the particulate matter (PM) increases as the EGR amount increases to reach a peak over time.

Further, when the EGR amount further increases over the reference EGR amount corresponding to the aforementioned peak, the particulate matter is reduced as the EGR amount increases.

Accordingly, for example, both the NO_{X} concentration and particulate matter concentration can be reduced to a predetermined target concentration as shown in the region A of Fig. 23, by securing an EGR amount exceeding the aforementioned reference EGR amount.

However, in a case where the high-pressure EGR passage is used, the exhaust is taken out from the exhaust passage further upstream than the turbine. Therefore, the rotation speed of the turbine lowers as the EGR amount increases, and supercharging to the internal combustion engine becomes insufficient.

Accordingly, this becomes a disadvantage in attaining a target output, and due to a reduction in oxygen supply to the internal combustion engine, there occurs a disadvantage that the particulate matter increases.

On the other hand, an EGR system provided with not only a high-pressure EGR passage but also a low-pressure EGR passage has been proposed (refer to Patent Document 2).

The low-pressure EGR passage in this EGR system communicates an exhaust passage further downstream than a turbine and an intake passage further upstream than a compressor with each other. A low-pressure EGR gas is led as a portion of the exhaust to the intake passage via the low-pressure EGR passage, and this low-pressure EGR gas and fresh air are mixed in the intake passage, and supplied as a gas mixture to the internal combustion engine.

In a case where such a low-pressure EGR passage is used, the exhaust is taken out from the exhaust passage further downstream than the turbine. Therefore, the rotation speed of the turbine does not lower even when the EGR amount increases, and supercharging to the internal combustion engine becomes sufficient.

Accordingly, using the low-pressure EGR passage allows performing sufficient supercharging while securing an EGR amount exceeding the aforementioned reference EGR amount. More specifically, since the EGR amount corresponding to the region A in Fig. 23 can be secured, both the NO_{X} and particulate matter can be effectively reduced.

However, in the case where the low-pressure EGR passage is used, the following problem occurs.

During warm-up operation of the internal combustion engine or during cold start, since the internal combustion engine is in a low-temperature state, an oxygen becomes to be deficient within the combustion chamber by leading the low-pressure EGR gas to the intake passage through the low-pressure EGR passage. Therefore, the fuel becomes to be not easily burn.

Therefore, it takes time until the internal combustion engine warms up, and there occurs a disadvantage that, during that period, the concentration of unburned fuel contained in the exhaust gas to be discharged from the internal combustion engine, in other words, hydrocarbons (HC) and carbon monoxide (CO) being toxic substances rises.

The following can be considered in order to avoid such a disadvantage.

A catalyst is provided in the high-pressure EGR passage. Then, during warm-up operation of the internal combustion engine, or during cold start, the low-pressure EGR passage is not used, but only the high-pressure EGR passage is used for an oxidation reaction (combustion) of unburned fuel with the aforementioned catalyst to raise the high-pressure EGR gas in temperature, and then the high-pressure EGR gas raised in temperature is led to the internal combustion engine.

In this case, since a gas mixture of fresh air and the high-pressure EGR gas raised in temperature is led to the internal combustion engine, the warming up of the internal combustion engine is promoted to bring about a state where the fuel easily burns in the combustion chamber, whereby the concentration of toxic substances contained in the exhaust gas is reduced.

Meanwhile, to a member that forms the high-pressure EGR passage, as a result of the high-pressure EGR gas raised in temperature passing therethrough, heat is conducted from the high-pressure EGR gas. This heat is released into the atmosphere from the member forming the high-pressure EGR passage to be lost.

If the gas mixture to be led to the intake passage can be heated by using heat thus conducted from the EGR gas, there is an advantage in more efficiently promoting warming up of the internal combustion engine. Moreover, there is an advantage in more efficiently reducing the concentration of toxic substances contained in the exhaust gas.

Accordingly, a coupling member having two passages is formed, for which a part of a high-pressure EGR passage to be connected to an intake passage and a part of the intake passage to be connected to an intake manifold are molded integrally from metal with high heat conductivity. Then, it is considered to make a high-pressure EGR gas and a gas mixture flow via this coupling member.

When such a coupling member is used, heat of the high-pressure EGR gas passing through one of the passages of the coupling member is effectively conducted to the gas mixture passing through the other passage, and therefore, the heat of the high-pressure EGR gas can be effectively used.

In this case, the coupling member is provided with an intake passage and a high-pressure EGR passage.

Moreover, in an end portion of the intake manifold to which the coupling member is coupled, an intake passage to be connected to the intake passage and a high-pressure EGR passage to be connected to the high-pressure EGR passage are provided.

Then, the coupling member and the end portion of the intake manifold are fastened with a metallic gasket interposed between a matching surface of the coupling member and a matching surface of the end portion of the intake manifold.

In such a fastened state, both intake passages of the coupling member and intake manifold are hermetically connected by a bead portion of the gasket, and both high-pressure EGR passages are hermetically connected by a bead portion of the gasket.
[Patent Document 1] Japanese Patent Publication Number 2002-371901
[Patent Document 2] Japanese Patent Publication Number 2005-299615

However, because a high-pressure EGR gas with high temperature flows through the high-pressure EGR passage, and a gas mixture with a lower temperature than that of the high-pressure EGR gas flows through the intake passage, a partial difference in temperature occurs in the gasket.

A partial difference in thermal expansion occurs due to the occurrence of such a difference in temperature, and therefore, the gasket is distorted. When the gasket is repeatedly distorted in such a manner, elasticity of the bead portion of the gasket is lost over time, and there is a possibility that the sealing function of the gasket deteriorates.

It is therefore one advantageous aspect of the present invention to provide a flow passage member structure that is advantageous, when there is a difference in temperature between fluids flowing through at least two flow passages, in enhancing the durability of a gasket.

According to one aspect of the invention, there is provided a flow passage member structure, including:
a first member having a first face formed with at least two openings communicated with flow passages respectively;
a second member having a second face formed with openings communicated with flow passages respectively, a number of the openings of the second member being same as a number of the openings of the first member, wherein each of the openings of the second member has a shape same as a shape of each of the openings of the first member respectively and is disposed coaxially with each of the openings of the first member respectively;
a gasket, configured to keep a fluid flowing through a first one of the flow passages away from the opening of a second one of the flow passages, and held by the first face and the second face therebetween so that the flow passages of the first member and the flow passages of the second member are communicated in sealed manner; and
a circulating passage, defined by the gasket and at least the first face so that the fluid flowing through the first one of the flow passages circulates around a periphery of the second one of the flow passages.

The gasket may include:
a plate, formed with a first hole communicating with the opening of the second one of the flow passages and a second hole communicating with the first one of the flow passages;
a first bead, protruded on the plate, and disposed at a circumference of the first hole; and
a second bead, protruded on the plate, configured to be elastically deformed by held between the first face and the second face, and disposed so as to surround the second hole and the first bead.

The first bead and the second bead may be protruded on the plate in a thickness direction of the plate.

The circulating passage may be defined by the plate, the first bead, the second bead, and at least the first face.

The circulating passage may include a concave portion formed on the first face.

The circulating passage may include a thin portion of the gasket where a thickness thereof is thinner than a thickness of the plate.

The circulating passage may include:
an inlet portion, which communicates with the first one of the flow passages, and through which the fluid flowing through the first one of the flow passage flows into the circulating passage; and
an outlet portion through which the fluid which has circulated in the circulating passage flows out to the first one of the flow passages.

The gasket may be formed with a notch at a part thereof defining the inlet portion in a direction from the first one of the flow passages toward the periphery.

The second one of the flow passage may allow a part of an exhaust gas to flow into an intake gas passage.

The second one of the flow passage may be connected to the intake gas passage at a position which is upstream side from the gasket in a flow direction of the fluid flowing through the first one of the flow passages, so that the exhaust gas flowing into the first one of the flow passages from the second one of the flow passages flows along a circumferential direction of an inner face of the first one of the flow passages.

In the following preferred embodiments of the invention will be described with reference to the drawings, in which:
Fig. 1 is a diagram showing an EGR system applied with a flow passage structure according to a first embodiment of the present invention.
Fig. 2 is a sectional view of an intake manifold and a coupling member according to the first embodiment of the present invention.
Fig. 3 is a perspective view of the coupling member shown in Fig. 2.
Fig. 4 is a sectional view along a line A-A of Fig. 3.
Fig. 5 is a sectional front view showing a coupling structure of a first member and a second member according to the first embodiment of the present invention.
Fig. 6 is a plan view of a gasket according to the first embodiment of the present invention.
Fig. 7 is a sectional front view of the gasket shown in Fig. 6.
Fig. 8 is a sectional front view showing a coupling structure of a first member and a second member according to a second embodiment of the present invention.
Fig. 9 is a sectional front view of the first member shown in Fig. 8.
Fig. 10 is a view on arrow A of Fig. 9.
Fig. 11 is a sectional front view showing a coupling structure of a first member and a second member according to a third embodiment of the present invention.
Fig. 12 is a plan view of a gasket according to the third embodiment of the present invention.
Fig. 13 is a sectional front view of the gasket shown in Fig. 12.
Fig. 14 is a sectional front view showing a coupling structure of a first member and a second member according to a fourth embodiment of the present invention.
Fig. 15 is a sectional front view showing a coupling structure of a first member and a second member according to a fifth embodiment of the present invention.
Fig. 16 is a plan view of a matching surface of a gasket according to the fifth embodiment of the present invention.
Fig. 17 is a sectional front view of the second member shown in Fig. 15.
Fig. 18 is a sectional front view showing a coupling structure of a first member and a second member according to a sixth embodiment of the present invention.
Fig. 19 is a sectional front view of a gasket shown in Fig. 18.
Fig. 20 is a view on arrow A of Fig. 19.
Fig. 21 is a sectional front view showing a coupling structure of a first member and a second member according to a seventh embodiment of the present invention.
Fig. 22 is a plan view of a gasket according to an eighth embodiment of the present invention.
Fig. 23 is a diagram showing the relationship between the EGR amount and NO_{X} concentration and PM concentration.

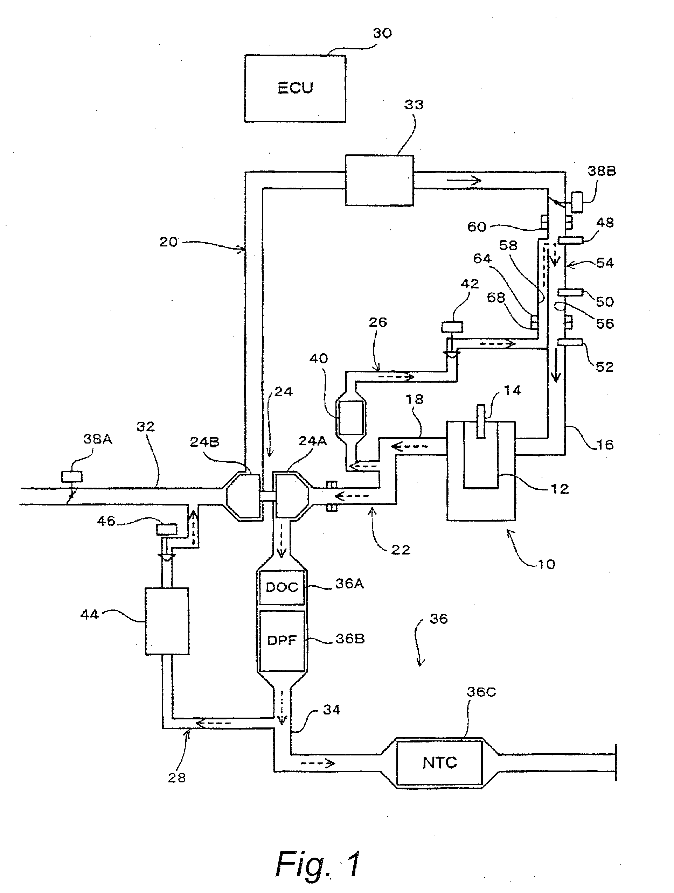

An EGR system of an internal combustion engine (hereinafter, referred to as an engine) to be applied with a coupling structure of a metallic member having two flow passages of a first embodiment will be described with reference to Fig. 1.

The engine 10 consists of a diesel engine.

The engine 10, which may be a normal gasoline engine or a gasoline direct injection engine, is not limited.

The engine 10 is mounted in a vehicle, and constructed with a combustion chamber 12, a fuel injection valve 14 (in-cylinder fuel injection valve), an intake manifold 16, and an exhaust manifold 18.

Moreover, the engine 10 is provided with an intake passage 20, an exhaust passage 22, a turbo charger 24, a high-pressure EGR passage 26, a low-pressure EGR passage 28, and an ECU (Electronic Control Unit) 30.

The combustion chamber 12 forms a space where fuel is burned.

The fuel injection valve 14 is connected via a fuel pipe to a fuel supply unit having a fuel tank (not shown). The fuel supply unit includes a high-pressure fuel pump that, as a result of supplying fuel in the fuel tank to the fuel injection valve 14, injects the fuel from the fuel injection valve 14 into the combustion chamber 12 at a desirable fuel pressure.

The fuel injection valve 14 is controlled by the ECU 30 in terms of the injection timing and injection amount of the fuel.

The intake manifold 16, which is connected to the combustion chamber 12 to lead a gas mixture of fresh air and a high-pressure EGR gas or a gas mixture of fresh air and a low-pressure EGR gas to the combustion chamber 12, is connected to an intake pipe 32 that takes in fresh air.

The intake manifold 16 is formed of a metal material, and various metal materials such as aluminum can be used as this metal material.

The intake passage 20 is constructed with an internal passage of the intake pipe 32, an internal passage of a cooler 33, and an internal passage of the intake manifold 16.

The cooler 33 cools a gas mixture that flows through the intake passage 20.

The exhaust manifold 18, which is connected to the combustion chamber 12 to discharge exhaust from the combustion chamber 12, is connected to an exhaust pipe 34 that leads exhaust.

The exhaust passage 22 is constructed with an internal passage of the exhaust manifold 18, an internal passage of the exhaust pipe 34, and an internal passage of an exhaust emission control device 36.

The exhaust passage 22 is provided with the exhaust emission control device 36 that purifies exhaust.

The exhaust emission control device 36 includes an oxidization catalyst (DOC: Diesel Oxidation Catalyst) 36A, a diesel particulate filter (DPF: Diesel Particulate Filter) 36B, and a NO_{X} trap catalyst 36C.

The oxidization catalyst 36A oxidizes CO and HC contained in exhaust to be decomposed into carbon dioxide and water.

The diesel particulate filter 36B traps and removes particulate matter (PM) contained in exhaust.

The NO_{X} trap catalyst 36C temporarily traps NO_{X} in exhaust to make the exhaust into a reducing atmosphere, and then releases NO_{X} to be reduced to N₂ and CO₂ for removal.

The oxidization catalyst 36A, the diesel particulate filter 36B, and the NO_{X} trap catalyst 36C are arranged in this order from upstream to downstream of the exhaust passage 22.

The turbo charger 24 is constructed with an exhaust gas turbine 24A and an intake compressor 24B which are coaxially provided with each other.

The exhaust gas turbine 24A is provided upstream of the exhaust emission control device 36 within the exhaust passage 22, and rotated by exhaust flowing through the exhaust passage 22.

The intake compressor 24B is provided upstream of the cooler 33 within the intake passage 20, and rotated by a rotation of the exhaust gas turbine 24A to compress fresh air or a gas mixture for supplying (supercharging) to the engine 10.

Also, in the figure, reference numeral 38A denotes an upstream-side throttle valve provided in the intake passage 20 that is upstream of the intake compressor 24B. Moreover, reference numeral 38B denotes a downstream-side throttle valve provided in the intake passage 20 that is downstream of the cooler 33. These two throttle valves 38A and 38B are controlled by the ECU 30 in terms of the opening degree.

The exhaust passage 22 is constructed with an internal passage of the exhaust manifold 18, an internal passage of the exhaust pipe 34, and an internal passage of the exhaust emission control device 36.

The high-pressure EGR passage 26 returns, as a high-pressure EGR gas, a portion of the exhaust flowing through the exhaust passage 22 to the engine 10 via the intake passage 20.

One end of the high-pressure EGR passage 26 is connected to the exhaust manifold 18, that is, the exhaust passage 22 that is upstream of the exhaust gas turbine 24A.

Moreover, the other end of the high-pressure EGR passage 26 is connected to the intake passage 20 further upstream than the intake manifold 16, that is, the intake passage 20 that is downstream of the downstream-side throttle valve 38B.

The high-pressure EGR passage 26 is provided with a catalyst 40 and a high-pressure EGR valve 42.

The catalyst 40 is provided on an upstream side within the high-pressure EGR passage 26, that is, closer to the exhaust manifold 18 in the high-pressure EGR passage 26.

The catalyst 40 consists of an oxidation catalyst.

The catalyst 40 makes unburned fuel contained in the high-pressure EGR gas flowing through the high-pressure EGR passage 26 cause an oxidation reaction (combustion) to thereby raise the high-pressure EGR gas in temperature.

The high-pressure EGR valve 42 is provided in the high-pressure EGR passage 26 further downstream than the catalyst 40.

The high-pressure EGR valve 42 is controlled to open and close by the ECU 30.

When the high-pressure EGR valve 42 is opened, the high-pressure EGR gas is recirculated to the engine 10 through the high-pressure EGR passage 26 to carry out high-pressure EGR.

When the high-pressure EGR valve 42 is closed, the recirculation of the high-pressure EGR gas to the engine 10 through the high-pressure EGR passage 26 is stopped to stop carrying out the high-pressure EGR.

The low-pressure EGR passage 28 returns, as a low-pressure EGR gas, a portion of the exhaust flowing through the exhaust passage 22 to the engine 10 via the intake passage 20.

In the present embodiment, one end of the low-pressure EGR passage 28 is connected to the exhaust passage 22 that is downstream of the exhaust gas turbine 24A, and connected, particularly, to the exhaust passage 22 between the diesel particulate filter 36B and the NO_{X} trap catalyst 36C.

Moreover, the other end of the low-pressure EGR passage 28 is connected to the intake pipe 20 further upstream than the intake compressor 24B, and connected, particularly, to the intake passage 20 between the upstream-side throttle valve 38A and the intake compressor 24B.

The low-pressure EGR passage 28 is provided with a cooler 44 and a low-pressure EGR valve 46.

The cooler 44 is provided on an upstream side in the low-pressure EGR passage 28.

The cooler 44 is for cooling the low-pressure EGR gas flowing through the low-pressure EGR passage 28 to thereby increase the low-pressure EGR gas in density for securing the amount of the low-pressure EGR gas to be recirculated to the engine 10.

The low-pressure EGR valve 46 is provided in the low-pressure EGR passage 28 further downstream than the cooler 44.

The low-pressure EGR valve 46 is controlled to open and close by the ECU 30.

When the low-pressure EGR valve 46 is opened, the low-pressure EGR gas is recirculated to the engine 10 through the low-pressure EGR passage 28 to carry out low-pressure EGR.

When the low-pressure EGR valve 46 is closed, the recirculation of the low-pressure EGR gas to the engine 10 through the low-pressure EGR passage 28 is stopped to stop carrying out the low-pressure EGR.

Also, in the figure, reference numeral 48 denotes an intake pressure detecting unit (boost sensor) that detects an intake pressure being a pressure of intake air in the intake passage 20 that is further downstream than the downstream-side throttle valve 38B.

Moreover, reference numeral 50 denotes an oxygen concentration detecting unit that detects a concentration of oxygen contained in intake air in the intake passage 20 that is further downstream than the intake pressure detecting unit 48. As this oxygen concentration detecting unit, conventionally known various sensors such as a linear air/fuel ratio sensor (LAFS) that detects an air/fuel ratio can be used.

Moreover, reference numeral 52 denotes a temperature detecting unit that detects a temperature of intake air in the intake passage 20 that is further downstream than the oxygen concentration detecting unit 50.

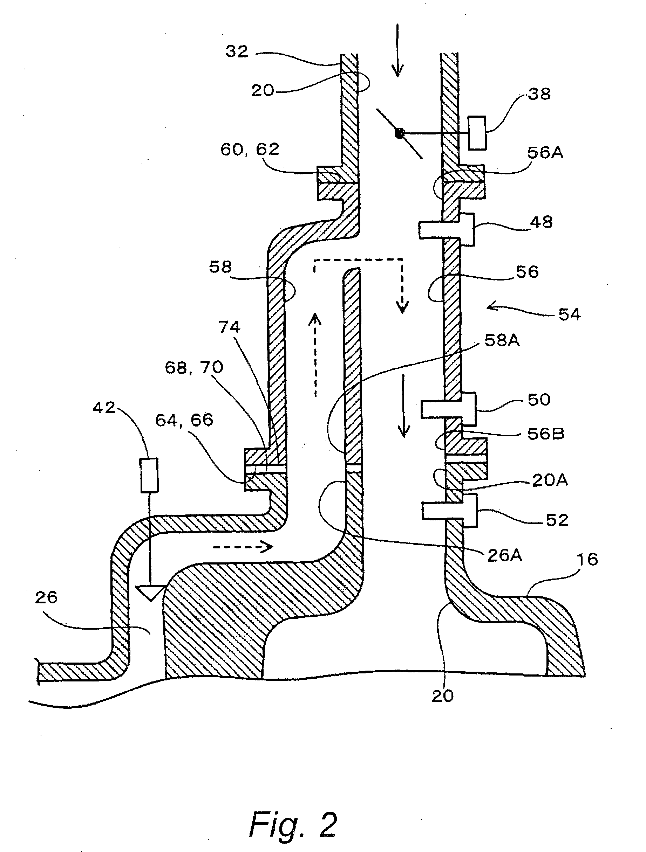

In the present embodiment, as shown in Fig. 2, the intake pressure detecting unit 48 and the oxygen concentration detecting unit 50 are provided in a coupling member 54 (first tubular body 56) to be described later, and the temperature detecting unit 52 is provided in the intake manifold 16.

The ECU 30 is an electronic control unit that performs control of the engine 10.

The ECU 30 consists of a microcomputer where a CPU, a ROM that stores a control program and the like, a RAM that provides a working area, an interface section that interfaces with a peripheral circuit, and the like are connected through a bus. The ECU 30 then functions as a result of the CPU executing the control program.

That is, the input side of the ECU 30 is connected with conventionally known various sensors, and input with detection information from these sensors.

Moreover, the input side of the ECU 30 is input with detection information from the aforementioned pressure detecting unit 48, oxygen concentration detecting unit 50, and temperature detecting unit 52.

Moreover, the output side of the ECU 30 is connected with various output devices such as the aforementioned fuel injection valve 14, upstream-side throttle valve 38A, downstream-side throttle valve 38B, high-pressure EGR valve 42, and low-pressure EGR valve 46.

The ECU 30, as a result of the CPU executing the control program, controls the various output devices based on detection information from various sensors including the intake pressure detecting unit 48, thereby performing control of the engine 10.

That is, the ECU 30 calculates a fuel injection amount and a fuel injection timing based on the detection information from the various sensors, and controls the output devices including the fuel injection valve 14 based on those calculation results.

Accordingly, an appropriate amount of fuel is injected at an appropriate pressure and appropriate timing from the fuel injection valve 14 to carry out fuel combustion.

Moreover, the ECU 30 detects a mixing degree of the intake air and EGR gas based on detection information from the oxygen concentration detecting unit 50 and the temperature detecting unit 52.

Then, the ECU 30 detects an EGR amount based on detection information from the various sensors including the intake pressure detecting unit 48, and controls the opening degree of the throttle valves 38A and 38B and the fuel injection amount so that the detected EGR amount falls within the range A shown in Fig. 23. in other words, the ECU 30 controls the opening degree of the throttle valves 38A and 38B and the fuel injection amount so that a NO_{X} concentration and particulate matter concentration in exhaust gas reaches a predetermined target concentration.

Moreover, the ECU 30, during warm-up operation of the engine 10 or during cold start, opens the high-pressure EGR valve 42 and closes the low-pressure EGR valve 46 to thereby carry out only high-pressure EGR.

Moreover, once the engine 10 has been warmed up, the ECU 30 closes the high-pressure EGR valve 42 and opens the low-pressure EGR valve 46 to thereby carry out only low-pressure EGR.

As shown in Fig. 2, there is provided between the intake tube 32 and the intake manifold 16 the coupling member 54 to couple these.

The coupling member 54 is provided with an intake passage 56 and a high-pressure EGR passage 58.

The intake passage 56 connects the intake passage 20 of the intake pipe 32 and the intake passage 20 of the intake manifold 16.

One end of the high-pressure EGR passage 58 is connected to the high-pressure EGR passage 26 formed in the intake manifold 16, and the other end thereof is connected to the intake passage 56.

The coupling member 54 is formed of a metal material with high thermal conductivity. Conventionally known various metal materials such as aluminum can be used as this metal material.

When fresh air flows in the intake passage 56 of the coupling member 54 from the intake passage 20 of the intake pipe 32 and a high-pressure EGR gas flows in the high-pressure EGR passage 58 of the coupling member 54 from the high-pressure EGR passage 26, the fresh air and high-pressure EGR gas are mixed within the intake passage 56 to be a gas mixture.

This gas mixture is supplied from the intake passage 56 to the intake passage 20 of the intake manifold 16.

In this case, heat of the high-pressure EGR gas flowing through the high-pressure EGR passage 58 is conducted from the high-pressure EGR passage 58 to the intake passage 56 via a wall portion forming the coupling member 54, and the heat of the high-pressure EGR gas thereby heats the gas mixture flowing through the intake passage 55.

Accordingly, the heat of the high-pressure EGR gas can be effectively used.

A flange 60 is provided at one end of the coupling member 54, and an opening 56A of the intake passage 56 is formed in a matching surface 62 of the flange 60 with the intake pipe 32.

The flange 60 is coupled to a flange of the intake pipe 32, so that the intake passage 20 of the intake pipe 32 and the intake passage 56 of the coupling member 54 are communicated with each other.

Moreover, a flange 64 is provided at the other end of the coupling member 54, and a matching surface 66 with the intake manifold 16 is provided for the flange 64.

An opening 56B of the intake passage 56 and an opening 58A of the high-pressure EGR passage 58 are formed in the matching surface 66.

A flange 68 is provided in an end portion of the intake manifold 16, and a matching surface 70 to be matched to the matching surface 66 of the coupling member 54 is formed in the flange 68.

An opening 20A of the intake passage 20 and an opening 26A of the high-pressure EGR passage 26 are formed in the matching surface 70.

In addition, the matching surface 66 of the coupling member 54 is matched to the matching surface 70 of the intake manifold 16 with a gasket 74 interposed therebetween, and the flanges 64 and 68 of both are fastened.

In the following, for simply and clearly describing the content of the present invention, the coupling member 54 is referred to as a first member 54, and the intake manifold 16 is referred to as a second member 16.

Moreover, the high-pressure EGR passage 58 of the coupling member 54 is referred to as a first flow passage 58, and the intake passage 56 of the coupling member 54 is referred to as a second flow passage 56.

Moreover, the high-pressure EGR passage 26 of the intake manifold 16 is referred to as a third flow passage 26, and the intake passage 20 of the intake manifold 16 is referred to as a fourth flow passage 20.

Moreover, the opening 58A of the high-pressure EGR passage 58 is referred to as a first opening 58A, and the opening 56B of the intake passage 56 is referred to as a second opening 56B.

Moreover, the opening 26A of the high-pressure EGR passage 26 is referred to as a third opening 26A, and the opening 20A of the intake passage 20 is referred to as a fourth opening 20A.

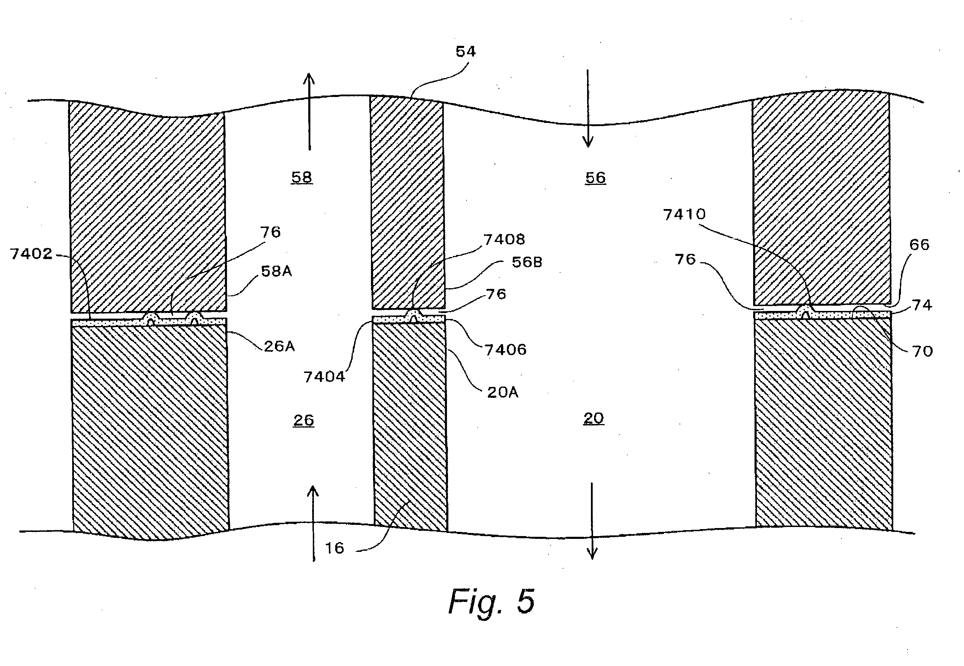

Coupling between the first member 54 and the second member 16 will be described in greater detail with reference to Fig. 5.

The first member 54 is provided with two flow passages of the second flow passage 56 and the first flow passage 58.

Moreover, in the end portion of the second member 16 to be coupled to the first member 54, two flow passages of the fourth flow passage 20 and the third flow passage 26 are provided.

In the matching surface 66 of the first member 54, the second opening 56B of the second flow passage 56 and the first opening 58A of the first flow passage 58 are formed.

In the matching surface 70 of the second member 16, the fourth opening 20A of the fourth flow passage 20 and the third opening 26A of the third flow passage 26 are formed.

The second opening 56B of the second flow passage 56 and the fourth opening 20A of the fourth flow passage 20 are coaxially matched, and the first opening 58A of the first flow passage 58 and the third opening 26A of the third flow passage 26 are coaxially matched.

In addition, the matching surface 66 of the first member 54 and the matching surface 70 of the second member 16 are matched with the gasket 74 interposed therebetween. Then, their flanges 64 and 68 are fastened. That is, the gasket 74 is held by the matching surface 66 of the first member 54 and the matching surface 70 of the second member 16 therebetween.

In other words, the first member 54 has the matching surface 66 formed with at least two openings of flow passages.

Moreover, the second member 16 has the matching surface 70 formed with openings of flow passages being the same in number and shape as those of the first member 54.

The gasket 74 is formed of a metal material, and conventionally known various metal materials such as stainless steel may be used as this metal material.

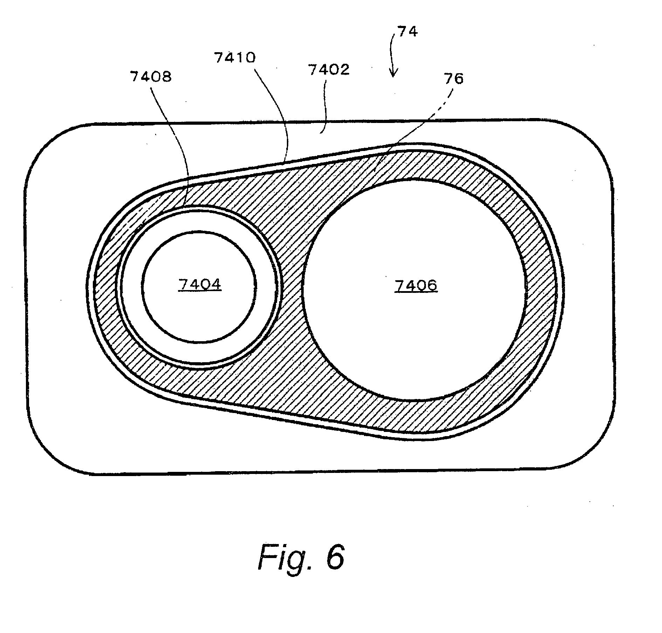

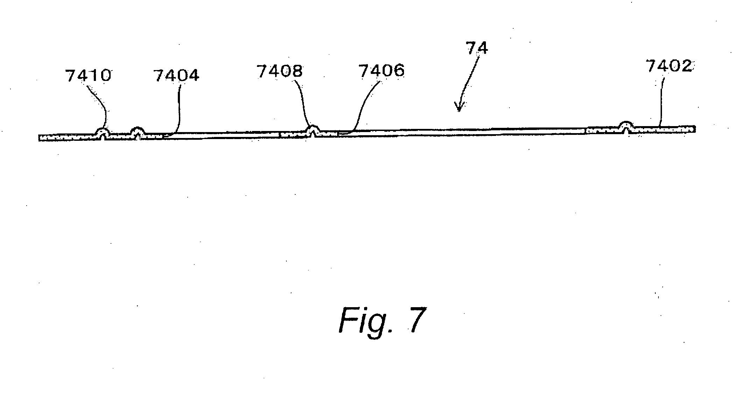

As shown in Fig. 6 and Fig. 7, the gasket 74 has a flat plate portion 7402, a first hole 7404, a second hole 7406, a first bead portion 7408, and a second bead portion 7410.

An outer edge of the flat plate portion 7402 is formed with a contour being in the same shape as that of the flange 64, 68.

The first hole 7404, which is for communicating the first opening 58A and the third opening 26A with each other, is formed with the same inner diameter as that of the first opening 58A and the third opening 26A.

The second hole 7406, which is for communicating the second opening 56B and the fourth opening 20A with each other, is formed with the same inner diameter as the second opening 56B and the fourth opening 20A.

In other words, the first hole 7404 is formed in the flat plate portion 7402 to communicate with the openings of the other flow passage, and the second hole 7406 is formed in the flat plate portion 7402 to communicate with the openings of one flow passage.

The first bead portion 7408 and the second bead portion 7410 are, on the flat plate portion 7402, protruded in the same direction of the thickness direction of the flat plate portion 7402.

The first bead portion 7408 is elastically deformed with the gasket 74 being sandwiched with the matching surfaces 66 and 70 to hermetically communicate the first opening 58A and the third opening 26A via the first hole 7404 with each other.

In greater detail, while the gasket 74 is sandwiched with the matching surfaces 66 and 70, a tip portion being at a front end side in the bulging direction of the first bead portion 7408 contacts the matching surface 66, and a base portion located at the side opposite to the tip portion contacts the matching surface 70, so that the first bead portion 7408 is elastically deformed.

That is, as a result of the tip portion and base portion of the first bead portion 7408 elastically contacting the matching surfaces 66 and 70, the first opening 58A and the third opening 26A are hermetically communicated with each other via the first hole 7404.

The second bead portion 7410 is elastically deformed with the gasket 74 being sandwiched with the matching surfaces 66 and 70 to hermetically communicate the second opening 56B and the fourth opening 20A via the second hole 7406 with each other.

In greater detail, while the gasket 74 is sandwiched with the matching surfaces 66 and 70, a tip portion being at a front end side in the bulging direction of the second bead portion 7410 contacts the matching surface 66, and a base portion located at the side opposite to the tip portion contacts the matching surface 70, so that the second bead portion 7410 is elastically deformed.

That is, as a result of the tip portion and base portion of the second bead portion 7410 elastically contacting the matching surfaces 66 and 70, the second opening 56B and the fourth opening 20A are hermetically communicated with each other via the second hole 7406.

In other words, while the respective openings of the flow passages of the first member 54 and the respective openings of the flow passages of the second member 16 are coaxially matched, the gasket 74 is sandwiched between the matching surfaces of the first member 54 and the second member 16. Accordingly, the flow passages on the first member 54 side and the flow passages on the second member 16 side are connected in a hermetically sealed state.

As shown in Fig. 6, the first bead portion 7408 is provided so as to surround the first hole 7404, and formed in an annular shape coaxial with the first hole 7404.

The second bead portion 7410 is formed in an elongated annular shape so as to surround the second hole 7406 and the first bead portion 7408.

In other words, the first bead portion 7408, which is protruded on the flat plate portion 7402 and elastically deformed in a state sandwiched with the matching surfaces 66 and 70, is provided around the first hole 7404.

Moreover, the second bead portion 7410, which is protruded on the flat plate portion 7402 and elastically deformed in a state sandwiched with the matching surfaces 66 and 70, is provided so as to surround the second hole 7406 and the first bead portion 7408.

The first bead portion 7408 and the second bead portion 7410 are protruded in the same direction of the thickness direction of the flat plate portion 7402.

As shown in Fig. 5, while the gasket 74 is sandwiched with the matching surfaces 66 and 70, a first circulation passage 76 through which a fluid (gas mixture) flowing through the second flow passage 56 or the fourth flow passage 20 flows around the first bead portion 7408 is formed.

The first circulation passage 76 is formed between the matching surface 66 that the tip portions of the first and second bead portions 7408 and 7410 contact and the flat plate portion 7402 and between the outside of the first bead portion 7408 and the inside of the second bead portion 7410.

The shape of this first circulation passage 76 is shown in Fig. 6 by diagonal lines.

The first circulation passage 76 has a shape of a part extending annularly around the first hole 7404 and a part extending annularly outside of the first bead portion 7408 communicating with each other.

In other words, the first circulation passage 76 is formed by the flat plate portion 7402, the first bead portion 7408 and second bead portion 7410, and at least the matching surface 66 of the first member 54.

That is, the first circulation passage 76 is formed by the gasket 74 and at least the matching surface 66 of the first member 54, and a fluid flowing through one flow passage circulates through the outer periphery of an opening of the other flow passage isolated from the opening.

Next, operational effects of the first embodiment will be described.

A low-temperature fluid flowing through the second flow passage 56 or the fourth flow passage 20, that is, a low-temperature gas mixture, circulates around the first bead portion 7408 via the first circulation passage 76 in a part of the gasket 74.

Accordingly, the gasket 74 part around the first hole 7404, a part of the matching surface 66 around the first opening 58A, and a part of the matching surface 70 around the third opening 26A are cooled.

Consequently, a partial difference in temperature of the gasket 74 that occurs when a low-temperature gas mixture flows to the second hole 7406, the second opening 56B, and the fourth opening 20A simultaneously with a high-temperature fluid, that is, a high-pressure EGR gas with high temperature flowing to the first hole 7404, the first opening 58A, and the third opening 26A can be suppressed.

Therefore, a partial difference in thermal expansion that occurs in the gasket 74 is reduced, and the generation of distortion in the gasket 74 can be suppressed, so that a loss of elasticity of the bead portion of the gasket 74 due to long-term use can be suppressed.

Consequently, the sealing function of the gasket 74 can be secured over a long period of time, which is advantageous in enhancing the durability of the gasket 74.

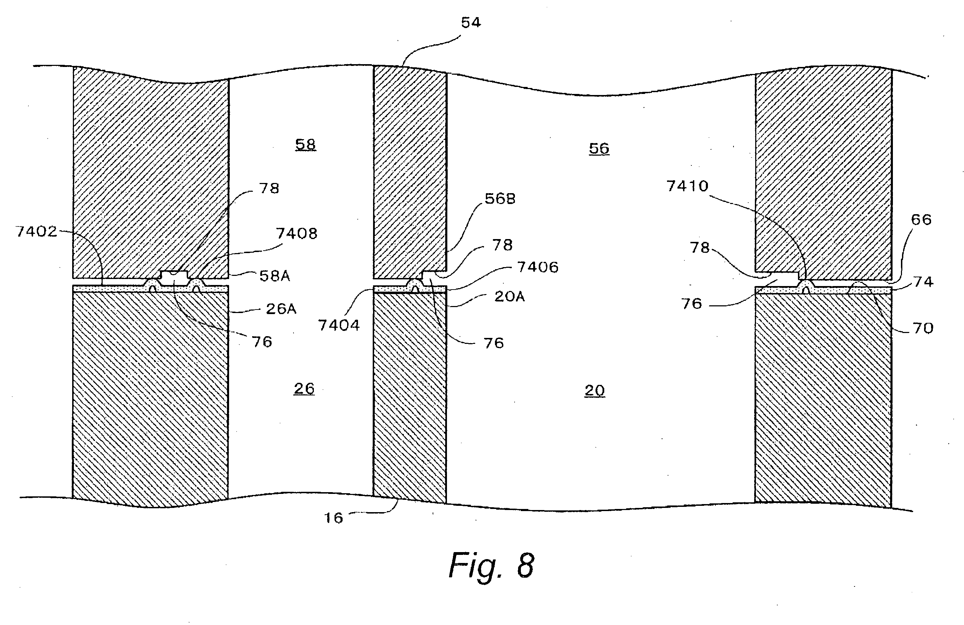

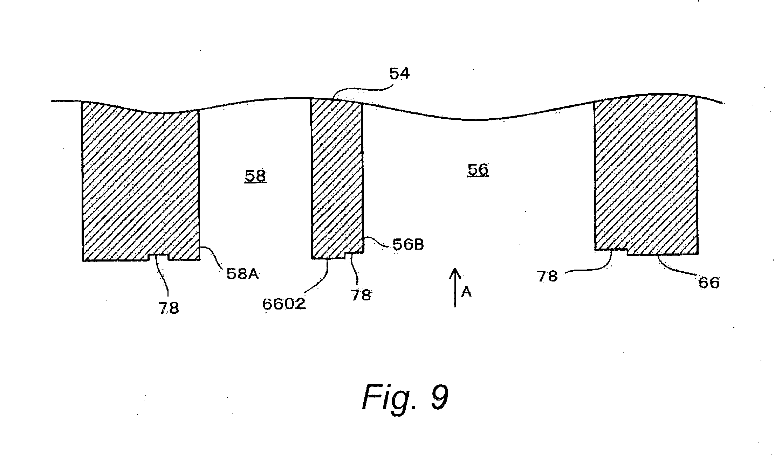

A second embodiment will be described with reference to Fig. 8 through Fig. 10.

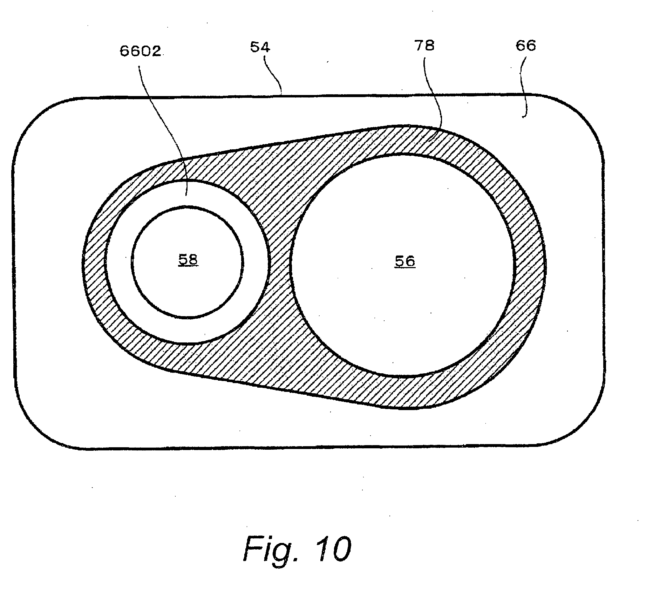

As shown in Fig. 10 by diagonal lines, there is formed, on the matching surface 66 that the tip portion of the first bead portion 7408 and the tip portion of the second bead portion 7410 contact, a circulation passage enlarging recess portion 78 extending along the first circulation passage 76 to enlarge the sectional area of the first circulation passage 76.

In other words, the first circulation passage 76 incudes the recess portion 78 formed in the matching surface 66 of the first member 54.

As shown in Fig. 10, there remains, on the matching surface 66, a plane portion 6602 that extends annularly around the first opening 58A and that the tip portion of the first bead portion 7608 elastically contacts.

The circulation passage enlarging recess portion 78 has a shape of a part extending annularly around the plane portion 6602 and a part extending annularly from the surroundings of the second opening portion 56B communicating with each other.

According to the second embodiment thus configured, the sectional area of the first circulation passage 76 can be enlarged.

Consequently, the flow rate of the low-temperature gas mixture flowing through the first circulation passage 76 can be increased, which is advantageous in suppressing a partial difference in the temperature of the gasket 74 and is more advantageous in enhancing the durability of the gasket 74.

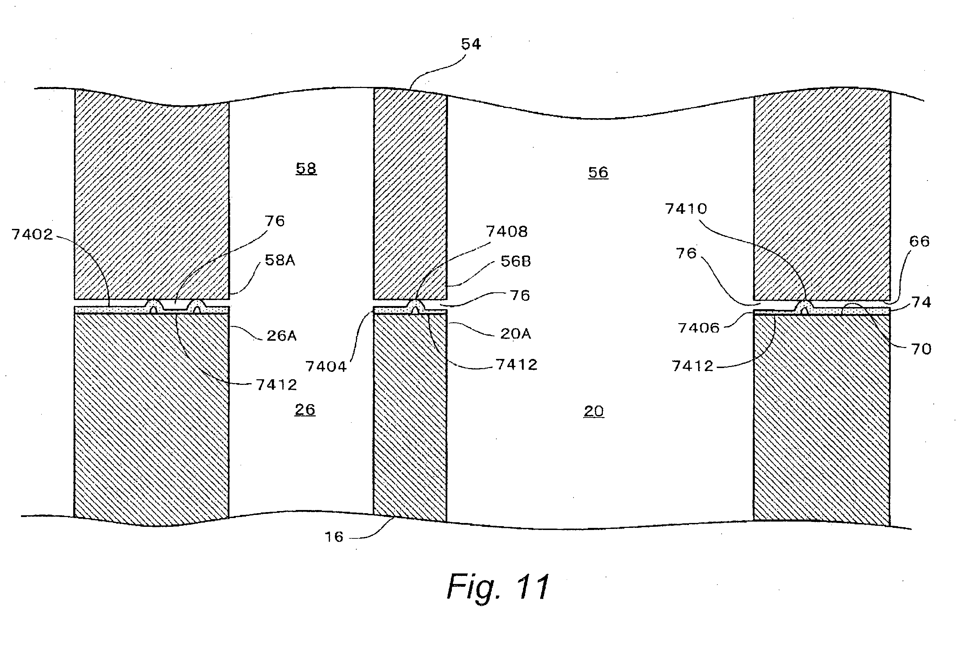

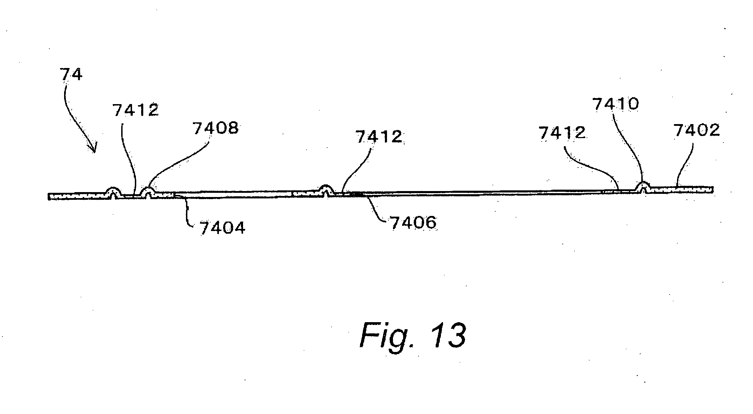

A third embodiment will be described with reference to Fig. 11 through Fig. 13.

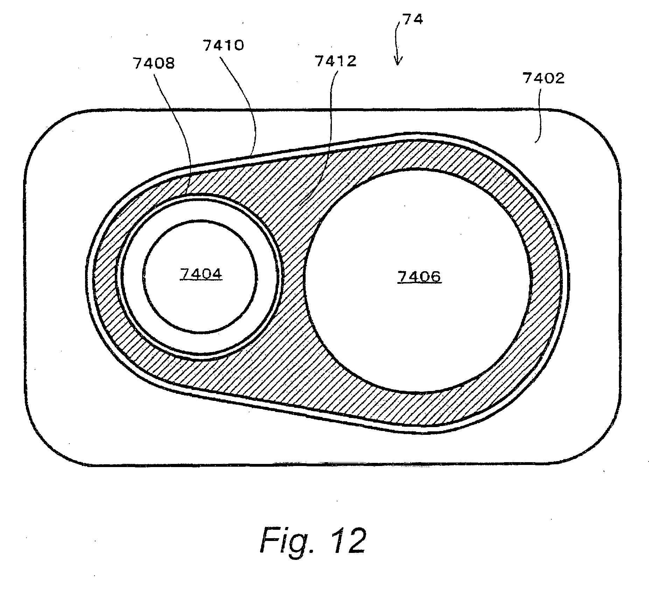

As shown in Fig. 12 by diagonal lines, there is formed the part forming the first circulation passage 76 in the flat plate portion 7402 of the gasket 74 as a thin-walled portion 7412 that is smaller in thickness than the other part of the flat plate portion 7402 to enlarge the sectional area of the first circulation passage 76.

In other words, the first circulation passage 76 is constructed with the thin-walled portion 7412 formed in the gasket 74.

The thin-walled portion 7412 has a shape of a part extending annularly outside of the first bead portion 7408 and a part extending annularly around the second hole 7406 communicating with each other.

According to the third embodiment thus configured, the sectional area of the first circulation passage 76 can be enlarged.

Consequently, as in the second embodiment, the flow rate of the low-temperature gas mixture flowing through the first circulation passage 76 can be increased, which is advantageous in suppressing a partial difference in the temperature of the gasket 74 and is more advantageous in enhancing the durability of the gasket 74.

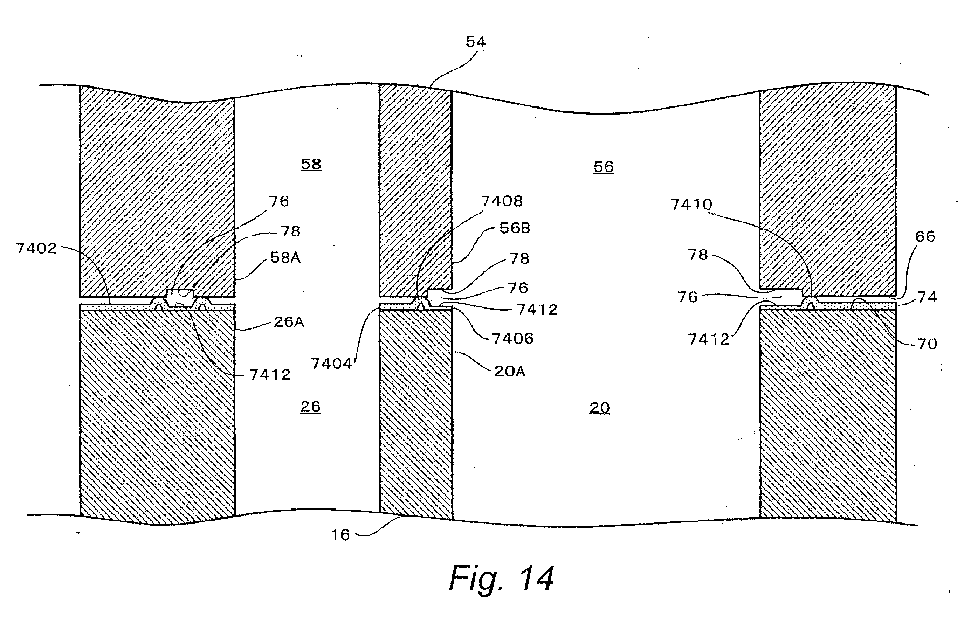

A fourth embodiment will be described with reference to Fig. 14.

For the fourth embodiment, both the circulation passage enlarging recess portion 78 of the second embodiment and the thin-walled portion 7412 of the third embodiment are provided.

That is, as shown in Fig. 10 by diagonal lines, there is formed, on the matching surface 66 that the tip portion of the first bead portion 7408 and the tip portion of the second bead portion 7410 contact, a circulation passage enlarging recess portion 78 extending along the first circulation passage 76 to enlarge the sectional area of the first circulation passage 76.

Moreover, as shown in Fig. 12 by diagonal lines, there is formed the part forming the circulation passage in the flat plate portion 7402 of the gasket 74 as a thin-walled portion 7412 that is smaller in thickness than the other part of the flat plate portion 7402 to enlarge the sectional area of the first circulation passage 76.

In other words, the first circulation passage 76 is constructed with both the recess portion 78 formed on the matching surface 66 of the first member 54 and the thin-walled portion 7412 formed in the gasket 74.

According to the fourth embodiment thus configured, the sectional area of the first circulation passage 76 can be enlarged.

Consequently, as compared to the second and third embodiments, the flow rate of the low-temperature gas mixture flowing through the first circulation passage 76 can be increased, which is advantageous in suppressing a partial difference in the temperature of the gasket 74 and is more advantageous in enhancing the durability of the gasket 74.

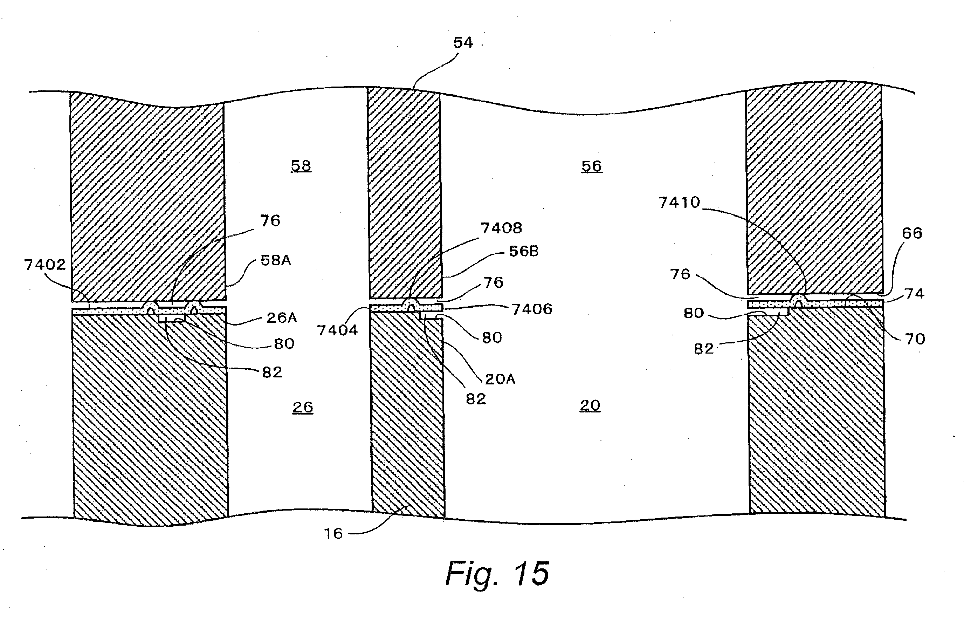

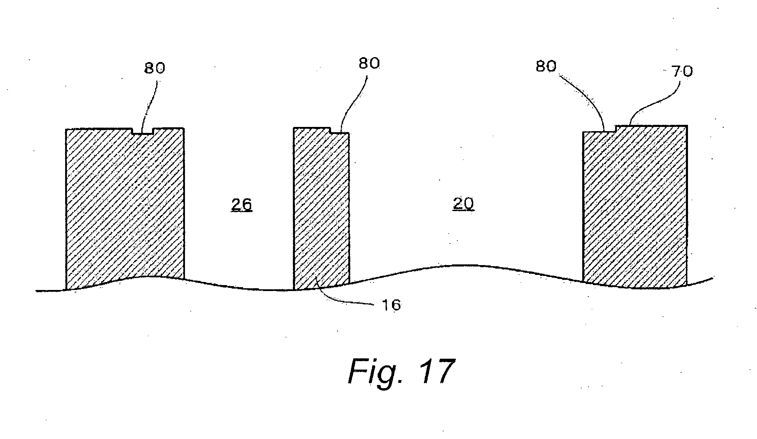

A fifth embodiment will be described with reference to Fig. 15 through Fig. 17.

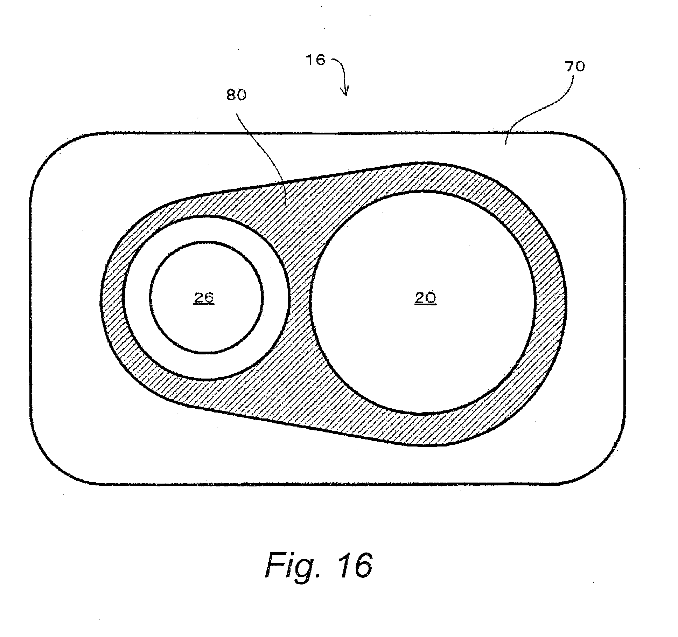

As shown in Fig. 16 by diagonal lines, while the gasket 74 is sandwiched with the matching surfaces 66 and 70, there is formed a circulation passage forming recess portion 80 on the matching surface 70 that the base portions of the first and second bead portions 7408 and 7410 contact.

The circulation passage forming recess portion 80 is formed, on the matching surface 70, across a part located between the outside of a part that the base portion of the annular first bead portion 7408 contacts and the inside of a part that the base portion of the elongated annular second bead portion 7410 contacts.

This circulation passage forming recess portion 80 and the flat plate portion 7402 form a second circulation passage 82 where a fluid flowing through the second flow passage 56 or the fourth flow passage 20 flows around the base portion of the first bead portion 7408.

According to a fifth embodiment, due to the first circulation passage 76, a low-temperature gas mixture circulates around the first bead portion 7408 in a part of the gasket 74.

Simultaneously, due to the second circulation passage 82, a low-temperature gas mixture circulates around the first bead portion 7408 in a part of the gasket 74.

Accordingly, the gasket 74 part around the first hole 7404, a part of the matching surface 66 around the first opening 58A, and a part of the matching surface 70 around the third opening 26A are cooled.

Consequently, as compared to the first embodiment, the flow rate of a low-temperature gas mixture to circulate around the first bead portion 7408 can be increased, which is advantageous in suppressing a loss of elasticity of the bead portion of the gasket 74 due to long-term use and advantageous in enhancing the durability of the gasket 74.

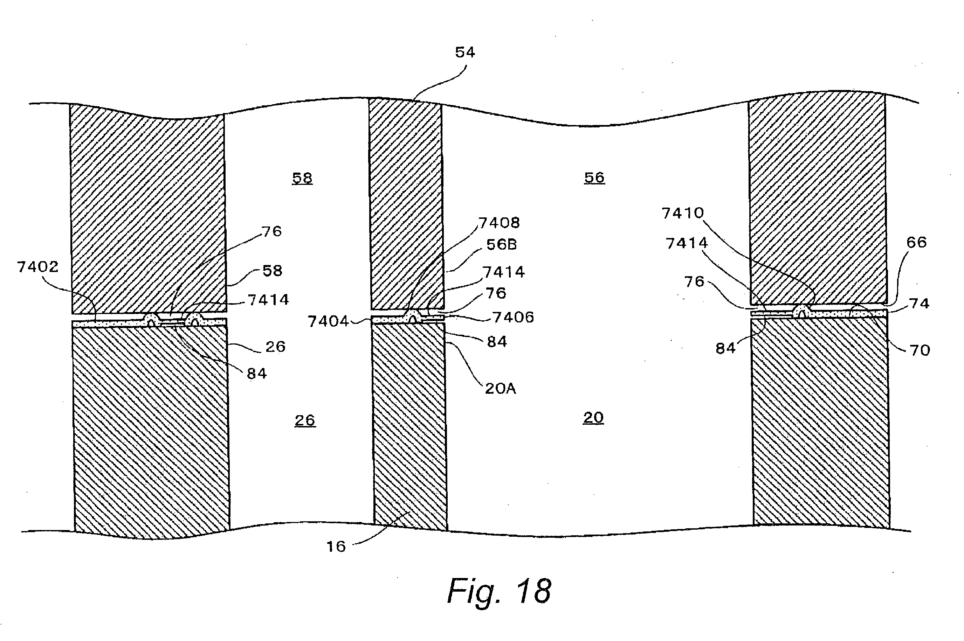

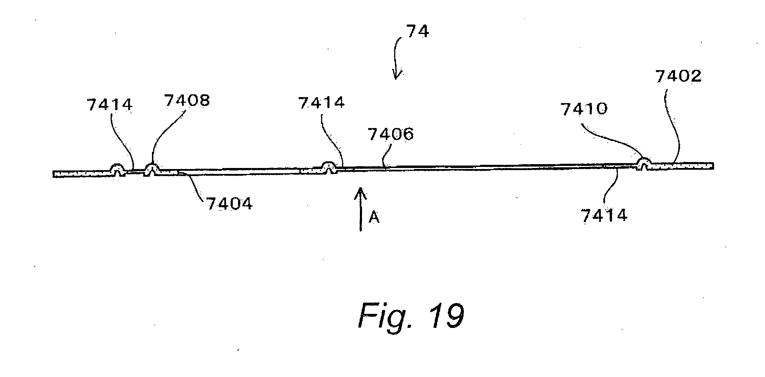

A sixth embodiment will be described with reference to Fig. 18 through Fig. 20.

In the sixth embodiment, there is formed, in the gasket 74, a thin-walled portion 7414 smaller in thickness than the other part of the flat plate portion 7402.

The thin-walled portion 7414, while the gasket 74 is sandwiched with the matching surfaces 66 and 70,is formed so as to be depressed in a direction to separate from the matching surface 70 that the base portions of the first and second based portions 7408 and 7410 contact.

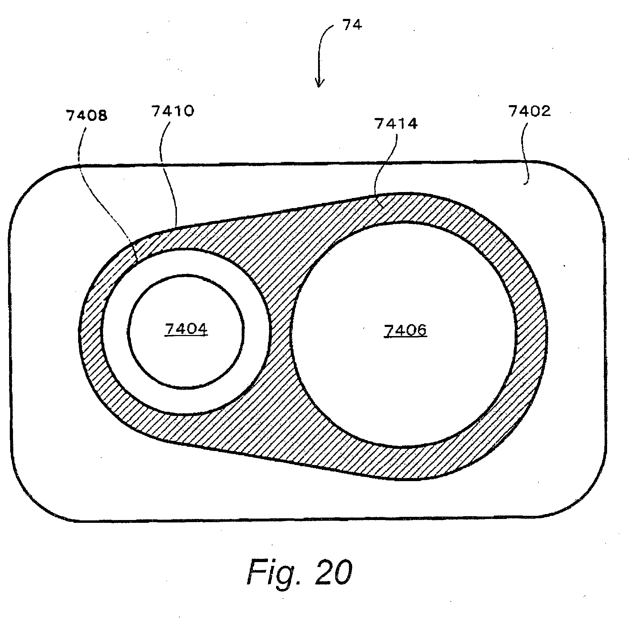

The thin-walled portion 7414, as shown in Fig. 20 by diagonal lines, is formed across a part located between the outside of the base portion of the first bead portion 7408 and the inside of the base portion of the second bead portion 7410.

Then, the matching surface 70 and the thin-walled portion 7414 form a third circulation passage 84 where a fluid flowing through the second flow passage 56 or the fourth flow passage 20 flows around the base portion of the first bead portion 7408.

According to the sixth embodiment thus configured, by not only the first circulation passage 76 but also the third circulation passage 84, a low-temperature gas mixture can be made to circulate around the first bead portion 7408 via the third circulation passage 84 in a part of the gasket 74.

Consequently, the first circulation passage 76 and the third circulation passage 84 are advantageous in suppressing a partial difference in the temperature of the gasket 74 and are more advantageous in enhancing the durability of the gasket 74.

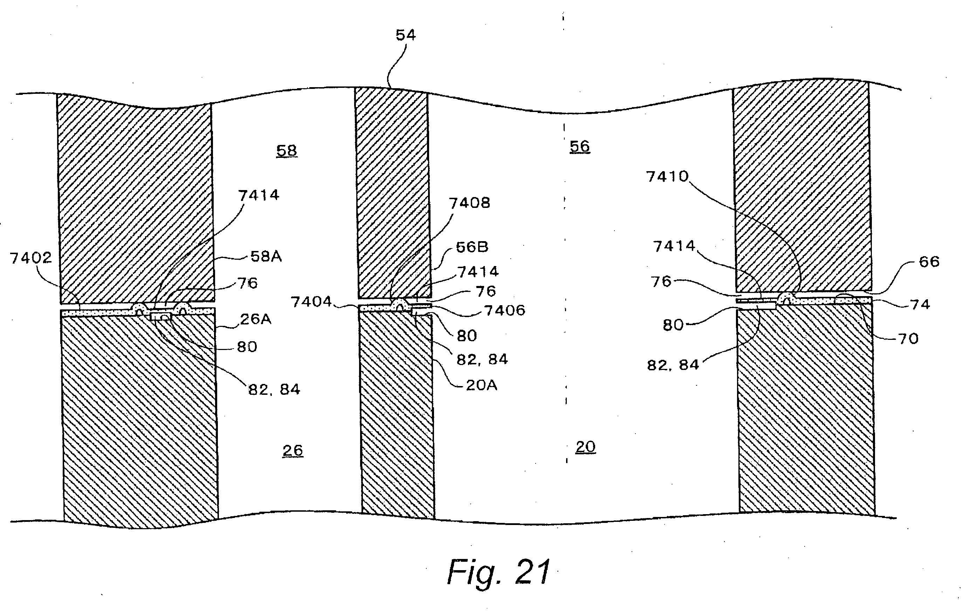

A seventh embodiment will be described with reference to Fig. 21.

For the seventh embodiment, the circulation passage forming recess portion 80 of the fifth embodiment and the thin-walled portion 7414 of the sixth embodiment are provided.

That is, as shown in Fig. 16 by diagonal lines, while the gasket 74 is sandwiched with the matching surfaces 66 and 70, there is formed, on the matching surface 70 that the base portion of the first bead portion 7408 and the base portion of the second bead portion 7410 contact, a circulation passage forming recess portion 80.

Then, the circulation passage forming recess portion 80 and the flat plate portion 7402 form a second circulation passage 82 where a fluid flowing through the second flow passage 56 or the fourth flow passage 20 flows around the base portion of the first bead portion 7408.

Moreover, in the gasket 74, the thin-walled portion 7414 depressed in a direction to separate from the matching surface 70 is formed, as shown in Fig. 20 by diagonal lines, across a part located between the outside of the base portion of the first bead portion 7408 and the inside of the base portion of the second bead portion 7410.

Then, the thin-walied portion 7414 forms a third circulation passage 84 where a fluid flowing through the second flow passage 56 or the fourth flow passage 20 flows around the base portion of the first bead portion 7408.

According to the seventh embodiment thus configured, by not only the first circulation passage 76 but also the second circulation passage 82 and the third circulation passage 84, a low-temperature gas mixture can be made to circulate around the first bead portion 7408 via the third circulation passage 84 in a part of the gasket 74.

Consequently, this is advantageous in suppressing a partial difference in the temperature of the gasket 74 and more advantageous in enhancing the durability of the gasket 74.

Moreover, in the seventh embodiment, it can also be considered that the sectional area of the second circulation passage 82 is increased by the thin-walled portion 7414, or it can also be considered that the sectional area of the third circulation passage 84 is increased by the circulation passage forming recess portion 80.

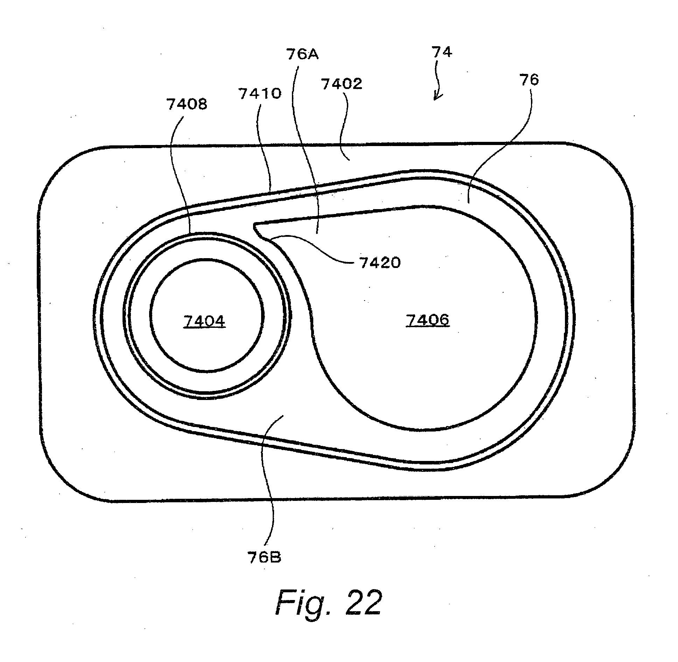

An eighth embodiment will be described with reference to Fig. 22.

In the flat plate portion 7402 of the gasket 74, a cut-away 7420 for making a fluid (gas mixture) flowing through the second flow passage 56 or the fourth flow passage 20 easily flow to the first circulation passage 76 is formed.

The cut-away 7420 is provided continuously from the second hole 7406, and provided so as to have a gradually narrow width as it is away from the second hole 7420.

In other words, the first circulation passage 76 includes an inlet portion 76A that communicates with one flow passage and where a fluid flowing through the one flow passage is led to the first circulation passage 76 and an outlet portion 76B through which a fluid circulated through the first circulation passage 76 is returned to one flow passage.

Moreover, in the gasket 74, there is provided at a site to form the inlet portion 76A, the cut-away 7420 from one flow passage toward the outer periphery (see paragraph 0038).

Providing such a cut-away 7420 allows making a low-temperature gas mixture more easily flow to the first circulation passage 76. In greater detail, the low-temperature gas mixture can be made to easily circulate around the first hole 7404, which is advantageous in increasing the flow rate of the gas mixture flowing through the first circulation passage 76.

In addition, this cut-away 7420 can of course be applied also to making a low-temperature gas mixture easily flow to the second circulation passage 82 and the third circulation passage 84.

Although a description has been given of the case where a fluid flows from the second flow passage 56 to the fourth flow passage 20, it is also possible to cause a swirling flow in the second flow passage 56 and make by this swirling flow a low-temperature gas mixture more easily flow to the first circulation passage 76. This allows increasing the flow rate of the gas mixture flowing through the first circulation passage 76.

In addition, this swirling flow can of course be applied also to making a low-temperature gas mixture easily flow to the second circulation passage 82 and the third circulation passage 84.

For causing a swirling flow in the second flow passage 56, various structures can be adopted.

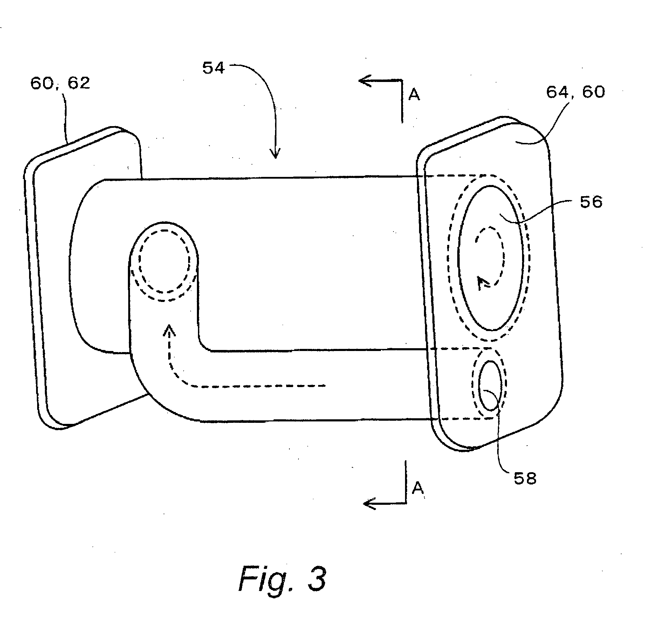

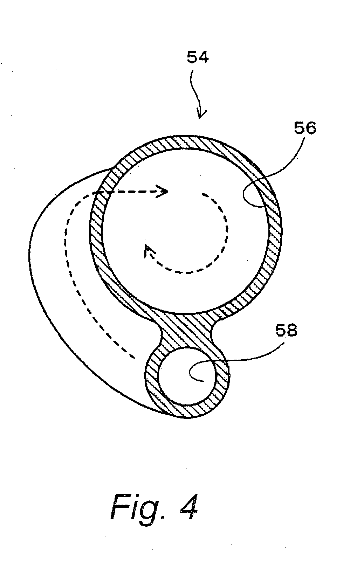

For example, as shown in Fig. 3 and Fig. 4, the direction of the end portion of the first flow passage 58 may be aligned in a tangential direction of the outer periphery of the second flow passage 56 to connect the first flow passage 58 to the second flow passage 56 so as to thereby cause a swirling flow.

In other words, the first flow passage 58 serving as one flow passage is an intake passage of an internal combustion engine.

The second flow passage 56 serving as the other flow passage is an exhaust gas recirculating passage to make a portion of exhaust flow into the intake passage.

Moreover, the exhaust gas recirculating passage is connected at a part of the intake passage upstream of the gasket 74, so that the exhaust to flow in flows along the circumferential direction of an inner wall surface of the intake passage.

In addition, using both the swirling flow and the foregoing cut-away 7420 allows making a low-temperature gas easily circulate around the first hole 7404, which is advantageous in further increasing the flow rate of the gas mixture flowing through the first circulation passage 76.

Although a description has been given for the case where the present invention has been applied to an intake system of an internal combustion engine, applications of the present invention are not limited to internal combustion engines.

Although two openings are formed on each of matching surfaces in the above description, more than two openings may be formed on each of matching surfaces.

Moreover, the fluid flowing through the first circulation passage 76, the second circulation passage 82, and the third circulation passage 84 may be higher in temperature than the fluid flowing through the first circulation passage 58 and the third circulation passage 26. In this case, the first bead portion 7408 is heated in a part of the gasket 74, and a partial difference in thermal expansion of the gasket 74 is thereby reduced, which is advantageous in enhancing the durability of the gasket 74.

Although only some exemplary embodiments of the invention have been described in detail above, those skilled in the art will readily appreciated that many modifications are possible in the exemplary embodiments without departing from the scope of the claims. Accordingly, all such modifications are intended to be included within the scope of the invention.

## Claims

1. A flow passage member structure, comprising:
a first member (54) having a first face (66) formed with at least two openings (56B, 58A) communicated with flow passages (56, 58) respectively;
a second member (16) having a second face (70) formed with openings (20A, 26A) communicated with flow passages (20, 26) respectively, a number of the openings of the second member (16) being same as a number of the openings of the first member (54), wherein each of the openings of the second member (16) has a shape same as a shape of each of the openings of the first member (54) respectively and is disposed coaxially with each of the openings of the first member (54) respectively;
a gasket (74), configured to keep a fluid flowing through a first one of the flow passages away from the opening of a second one of the flow passages, and held by the first face (66) and the second face (70) therebetween so that the flow passages (56, 58) of the first member (54) and the flow passages (20, 26) of the second member (16) are communicated in sealed manner;
**characterised in that**
a circulating passage (76) is defined by the gasket (74) and at least the first face (66) so that the fluid flowing through the first one of the flow passages circulates around a periphery of the second one of the flow passages.

2. The flow passage member structure as set forth in Claim 1, wherein:
the gasket (74) includes:
a plate (7402), formed with a first hole (7404) communicating with the opening of the second one of the flow passages and a second hole (7406) communicating with the first one of the flow passages;
a first bead (7408), protruded on the plate, and disposed at a circumference of the first hole (7404); and
a second bead (7410), protruded on the plate (7402), configured to be elastically deformed by held between the first face (66) and the second face (70), and disposed so as to surround the second hole (7406) and the first bead (7408),
the first bead (7408) and the second bead (7410) are protruded on the plate (7402) in a thickness direction of the plate, and
the circulating passage (76) is defined by the plate (7402), the first bead (7408), the second bead (7410), and at least the first face (66).

3. The flow passage member structure as set forth in Claim 1 or 2, wherein
the circulating passage (76) includes a concave portion formed on the first face (66).

4. The flow passage member structure as set forth in any one of Claims 1 to 3, wherein
the circulating passage (76) includes a thin portion of the gasket where a thickness thereof is thinner than a thickness of the plate.

5. The flow passage member structure as set forth in any one of Claims 1 to 4, wherein
the circulating passage (76) includes:
an inlet portion (76A), which communicates with the first one of the flow passages, and through which the fluid flowing through the first one of the flow passage flows into the circulating passage (76); and
an outlet portion (76B) through which the fluid which has circulated in the circulating passage (76) flows out to the first one of the flow passages, and
the gasket (74) is formed with a notch at a part thereof defining the inlet portion (76A) in a direction from the first one of the flow passages toward the periphery.

6. The flow passage member structure as set forth in any one of Claims 1 to 5, wherein
the second one of the flow passage allows a part of an exhaust gas to flow into an intake passage (58), and
the second one of the flow passage is connected to the intake passage (58) at a position which is upstream side from the gasket (74) in a flow direction of the fluid flowing through the first one of the flow passages, so that the exhaust gas flowing into the first one of the flow passages from the second one of the flow passages flows along a circumferential direction of an inner face of the first one of the flow passages.

## Patentansprüche

1. Strömungskanalelementstruktur, mit:
einem ersten Element (54), das eine erste Fläche (66) aufweist, die mit mindestens zwei Öffnungen (56B, 58A) ausgebildet ist, die jeweils mit Strömungskanälen (56, 58) in Verbindung stehen;
einem zweiten Element (16), das eine zweite Fläche (70) aufweist, die mit Öffnungen (20A, 26A) ausgebildet sind, die jeweils mit Strömungskanälen (20, 26) in Verbindung stehen, wobei die Anzahl der Öffnungen des zweiten Elements (16) dieselbe wie die Anzahl der Öffnungen des ersten Elements (54) ist, wobei jeweils jede der Öffnungen des zweiten Elements (16) eine Form aufweist, die dieselbe wie eine Form jeder der Öffnungen des ersten Elements (54) ist und jeweils koaxial mit jeder der Öffnungen des ersten Elements (54) angeordnet ist;
einer Dichtung (74), die konfiguriert ist, ein Fluid, das durch einen ersten der Strömungskanäle strömt, von der Öffnung eines zweiten der Strömungskanäle abzuhalten,
und die durch die erste Fläche (66) und die zweite Fläche (70) dazwischen gehalten wird, so dass die Strömungskanäle (56, 58) des ersten Elements (54) und die Strömungskanäle (20, 26) des zweiten Elements (16) in einer abgedichteten Weise in Verbindung stehen;
**dadurch gekennzeichnet, dass**
ein Zirkulationskanal (76) durch die Dichtung (74) und mindestens die erste Fläche (66) definiert ist, so dass das Fluid, das durch den ersten der Strömungskanäle strömt, um einen Umfang des zweiten der Strömungskanäle zirkuliert.

2. Strömungskanalelementstruktur nach Anspruch 1, wobei:
die Dichtung (74) aufweist:
eine Platte (7402), die mit einem ersten Loch (7404), das mit der Öffnung des zweiten der Strömungskanäle in Verbindung steht, und einem zweiten Loch (7406) ausgebildet ist, das mit dem ersten der Strömungskanäle in Verbindung steht;
einen ersten Wulst (7408), der auf der Platte vorsteht und an einem Umfang des ersten Lochs (7404) angeordnet ist; und
einen zweiten Wulst (7410), der auf der Platte (7402) vorsteht, der konfiguriert ist, elastisch verformt zu werden, indem er zwischen der ersten Fläche (66) und der zweiten Fläche (70) gehalten wird, und so angeordnet ist, dass er das zweite Loch (7406) und
den ersten Wulst (7408) umgibt,
wobei der erste Wulst (7408) und der zweiten Wulst (7410) auf der Platte (7402) in eine Dickenrichtung der Platte vorstehen, und
der Zirkulationskanal (76) durch die Platte (7402), den ersten Wulst (7408), den zweiten Wulst (7410) und mindestens die erste Fläche (66) definiert ist.

3. Strömungskanalelementstruktur nach Anspruch 1 oder 2, wobei der Zirkulationskanal (76) einen konkaven Abschnitt aufweist, der auf der ersten Fläche (66) ausgebildet ist.

4. Strömungskanalelementstruktur nach einem der Ansprüche 1 bis 3, wobei der Zirkulationskanal (76) einen dünnen Abschnitt der Dichtung aufweist, wo deren Dicke dünner als eine Dicke der Platte ist.

5. Strömungskanalelementstruktur nach einem der Ansprüche 1 bis 4, wobei der Zirkulationskanal (76) aufweist:
einen Einlassabschnitt (76A), der mit dem ersten der Strömungskanäle in Verbindung steht und durch den das Fluid, das durch den ersten der Strömungskanäle strömt, in den Zirkulationskanal (76) strömt; und
einen Auslassabschnitt (76B), durch den das Fluid, das im Zirkulationskanal (76) zirkuliert hat, aus dem ersten der Strömungskanäle herausströmt, und
die Dichtung (74) mit einer Kerbe an einem Teil davon, der den Einlassabschnitt (76A) bildet, in einer Richtung vom ersten der Strömungskanäle zum Umfang ausgebildet ist.

6. Strömungskanalelementstruktur nach einem der Ansprüche 1 bis 5, wobei
der zweite der Strömungskanäle einen Teil eines Abgases in einen Ansaugkanal (58) strömen lässt, und
der zweite der Strömungskanäle mit dem Ansaugkanal (58) an einer Position verbunden ist, die auf der Stromaufwärtsseite der Dichtung (74) in eine Strömungsrichtung des Fluids liegt, das durch den ersten der Strömungskanäle strömt, so dass das Abgas, das vom zweiten der Strömungskanäle in den ersten der Strömungskanäle strömt, längs einer Umfangsrichtung einer Innenfläche des ersten der Strömungskanäle strömt.

## Revendications

1. Structure d'élément de passages de flux, comprenant :
un premier élément (54) présentant une première face (66) formée avec au moins deux ouvertures (56B, 58A) communiquant avec des passages de flux (56, 58) respectifs ;
un deuxième élément (16) présentant une deuxième face (70) formée avec des ouvertures (20A, 26A) communiquant avec des passages de flux (20, 26) respectifs, un nombre d'ouvertures du deuxième élément (16) étant égal à un nombre d'ouvertures du premier élément (54), chaque ouverture du deuxième élément (16) présentant une forme identique à la forme de chaque ouverture correspondante du premier élément (54) et étant disposée coaxialement à chaque ouverture correspondante du premier élément (54) ;
un joint (74), prévu pour empêcher un fluide s'écoulant au travers d'un premier passage de flux de passer dans l'ouverture d'un deuxième passage de flux, et maintenu par et entre la première face (66) et la deuxième face (70) pour que les passages de flux (56, 58) du premier élément (54) et les passages de flux (20, 26) du deuxième élément (16) communiquent de manière étanche ;
**caractérisée**
**en ce qu'**un passage de circulation (76) est défini par le joint (74) et au moins la première face (66), de telle manière que le fluide s'écoulant au travers du premier passage de flux circule autour d'une périphérie du deuxième passage de flux.

2. Structure d'élément de passages de flux selon la revendication 1, où :
le joint (74) comprend :
une plaque (7402), formée avec un premier trou (7404) communiquant avec l'ouverture du deuxième passage de flux, et un deuxième trou (7406) communiquant avec le premier passage de flux ;
un premier bourrelet (7408) en saillie sur la plaque, et disposé sur une circonférence du premier trou (7404) ; et
un deuxième bourrelet (7410), en saillie sur la plaque (7402), prévu pour être élastiquement déformé en étant maintenu entre la première face (66) et la deuxième face (70), et disposé de manière à entourer le deuxième trou (7406) et le premier bourrelet (7408), le premier bourrelet (7408) et le deuxième bourrelet (7410) étant saillants sur la plaque (7402) dans la direction de l'épaisseur de la plaque, et
le passage de circulation (76) étant défini par la plaque (7402), le premier bourrelet (7408), le deuxième bourrelet (7410), et au moins la première face (66).

3. Structure d'élément de passages de flux selon la revendication 1 ou la revendication 2, où le passage de circulation (76) comporte une partie concave formée sur la première face (66).

4. Structure d'élément de passages de flux selon l'une des revendications 1 à 3, où le passage de circulation (76) comporte une partie mince du joint là où une épaisseur de celui-ci est inférieure à une épaisseur de la plaque.

5. Structure d'élément de passages de flux selon l'une des revendications 1 à 4, où le passage de circulation (76) comprend :
une partie d'entrée (76A) qui communique avec le premier passage de flux, et au par laquelle le fluide s'écoulant au travers du premier passage de flux s'écoule dans le passage de circulation (76) ; et
une partie d'évacuation (76B) par laquelle le fluide qui a circulé dans le passage de circulation (76) s'écoule hors du premier passage de flux, et où
le joint (74) est formé avec une encoche sur une partie définissant la partie d'entrée (76A) dans la direction du premier passage de flux vers la périphérie.

6. Structure d'élément de passages de flux selon l'une des revendications 1 à 5, où le deuxième passage de flux permet à une fraction d'un gaz d'échappement de s'écouler dans un passage d'admission (58), et où
le deuxième passage de flux est relié au passage d'admission (58) à un emplacement en amont du joint (74) dans une direction de flux du fluide s'écoulant au travers du premier passage de flux, de telle manière que le gaz d'échappement s'écoulant dans le premier passage de flux depuis le deuxième passage de flux s'écoule dans une direction circonférentielle d'une face intérieure du premier passage de flux.
